# EUROPÄISCHE PATENTANMELDUNG

(11) **EP 4 550 657 A1**
(43) Veröffentlichungstag der Anmeldung: **07.05.2025**
(21) Anmeldenummer: 23207849.3
(22) Anmeldetag: 06.11.2023
(51) Int. Cl.: H02P 9/02, H02P 29/62, F03D 1/00

(54) **VERFAHREN UND VORRICHTUNG ZUM BETREIBEN EINES WINDENERGIEANLAGENGENERATORS IN EINEM HEIZBETRIEB**

(71) Anmelder: Wobben Properties GmbH, 26607 Aurich (DE)
(72) Erfinder: SCHROBSDORFF, Simon, 26556 Eversmeer (DE)
(74) Vertreter: Eisenführ Speiser

(57) **Zusammenfassung**

Die Erfindung betrifft ein Verfahren zum Betreiben eines Windenergieanlagengenerators (12) in einem Heizbetrieb, wobei der Windenergieanlagengenerator (12) einen Rotor (16) und einen Stator (14) aufweist und der Stator (14) ein erstes Dreiphasensystem (32a) mit drei ersten Strängen (36a, 36b, 36c) und ein zweites Dreiphasensystem (32b) mit drei zweiten Strängen (36d, 36e, 36f) aufweist. Der Rotor (16) ist eingerichtet, ein Magnetfeld zu erzeugen und während einer Rotation mit dem Magnetfeld einen elektrischen Strom in das erste Dreiphasensystem (32a) und das zweite Dreiphasensystem (32b) einzuprägen. Das erste Dreiphasensystem (32a) weist mindestens einen ersten Schalter (54a, 54b, 54c, 54d, 54e, 54f, 64) zum Kurzschließen der ersten Stränge (36a, 36b, 36c) in einem geschlossenen Zustand (60) und zum Leerlaufenlassen der ersten Stränge (36a, 36b, 36c) in einem geöffneten Zustand (56) auf und das zweite Dreiphasensystem (32b) weist mindestens einen zweiten Schalter (54a, 54b, 54c, 54d, 54e, 54f, 64) zum Kurzschließen der zweiten Stränge (36d, 36e, 36f) in einem geschlossenen Zustand (60) und zum Leerlaufenlassen der zweiten Stränge (36d, 36e, 36f) in einem geöffneten Zustand (56) auf. Der Heizbetrieb umfasst eine erste Phase (70), wobei in der ersten Phase (70) der erste Schalter (54a, 54b, 54c, 54d, 54e, 54f, 64) in den geschlossenen Zustand (60) und der zweite Schalter (54a, 54b, 54c, 54d, 54e, 54f, 64) in den geöffneten Zustand (56) oder der erste Schalter (54a, 54b, 54c, 54d, 54e, 54f, 64) in den geöffneten Zustand (56) und der zweite Schalter (54a, 54b, 54c, 54d, 54e, 54f, 64) in den geschlossenen Zustand (60) geschaltet wird oder geschaltet bleibt.

Die Erfindung betrifft ferner ein Windenergieanlagengeneratorsystem (10) mit einem Windenergieanlagengenerator (12) und eine Windenergieanlage (100).

## Beschreibung

Die vorliegende Erfindung betrifft ein Verfahren zum Betreiben eines Windenergieanlagengenerators einer Windenergieanlage in einem Heizbetrieb sowie ein Windenergieanlagengeneratorsystem und eine Windenergieanlage, die eingerichtet sind, das Verfahren auszuführen.

Windenergieanlagen sind allgemein bekannt. Sie erzeugen mittels eines Windenergieanlagengenerators, der im Folgenden auch kurz als Generator bezeichnet wird, elektrische Leistung aus kinetischer Windenergie. Solche Windenergieanlagen sind nicht andauernd im Einsatz, sondern es kann vorkommen, dass diese gewartet werden müssen oder nicht ausreichend Wind vorhanden ist. So können längere Zeiträume auftreten, in denen die Windenergieanlage außer Betrieb gesetzt wird. In solchen Zeiträumen, die auch als Stillstandzeiten bezeichnet werden können, kann die Windenergieanlage abkühlen und an abgekühlten Bereichen kann Feuchtigkeit kondensieren.

Windenergieanlagen sind Witterungseinflüssen ausgesetzt. Hierzu sind bestimmte Komponenten der Windenergieanlagen vor Eindringen von Feuchtigkeit hermetisch abgeschlossen. Dies betrifft beispielsweise elektronische Teile, die in gekapselten Schränken untergebracht sind. Im Bereich der Gondel, in dem der Generator angeordnet ist, ist jedoch eine Versiegelung gegen Feuchtigkeit nur schwer umsetzbar.

Gerade der Generator einer Windenergieanlage umfasst jedoch große Massen, die beispielsweise im Fall einer Abkühlung über Nacht bei am Folgetag steigenden Temperaturen Bereiche mit großer Gefahr einer Ansammlung von Feuchtigkeit darstellen. Da warme Luft mehr Feuchtigkeit speichern kann als kalte Luft, dringt also mit Feuchtigkeit angereicherte warme Luft in die Gondel ein und trifft dort auf einen kalten Generator. Die Feuchtigkeit schlägt sich dann auf dem Generator nieder und kondensiert zu Wasser, das in großen Mengen auftreten kann.

Ein feuchter Generator kann problematisch sein, wenn sich die Feuchtigkeit auf die Isolierung der elektrischen Spulen und Leiter niederschlägt und dort zur Reduzierung der Isolationswirkung beiträgt. Gerade Harze, die bei der Isolierung verwendet werden, nehmen nämlich Feuchtigkeit auf. Es besteht somit die Gefahr, dass nach einem Wiederbetreiben eines Windenergieanlagengenerators nach einer längeren Stillstandzeit Erdschlüsse im Generator aufgrund eingetretener Feuchtigkeit auftreten. Derartige Erdschlüsse können zu einer Beschädigung des Generators führen.

Aus dem Dokument EP 2 431 604 B1 ist daher bereits eine Generatorheizung zum Beheizen eines Generators nach längerer Stillstandzeit bekannt, um durch das Beheizen des Generators eingedrungene Feuchtigkeit zu entfernen. Das dort beschriebene Verfahren umfasst das Herstellen eines Kurzschlusses im Stator, um so einen Kurzschlussstrom im Stator durch Rotation eines erregten Rotors zu erzeugen. Der Kurzschlussstrom führt aufgrund der in den Windungen vorhandenen Widerstände zur Wärmeentwicklung. Die Wärmeentwicklung ist aufgrund der Amplitude des so erzeugbaren Kurzschlussstroms während eines solchen Heizbetriebs jedoch so gering, dass eine lange Heizdauer nötig ist, die mehrere Stunden andauern kann.

Es ist demnach jedes Mal nach einer längeren Stillstandzeit nötig, den lang andauernden Heizprozess auszuführen, bis die Windenergieanlage tatsächlich in den normalen Betrieb überführt werden kann, um Energie in ein Versorgungsnetz einzuspeisen. In der Zeit, in der der Windenergieanlagengenerator beheizt wird, entsteht somit ein Verlust durch einen entgangenen Gewinn, da keine Energie eingespeist werden kann. Darüber hinaus sind keine Netzdienstleistungen zur Stützung des Netzes ausführbar.

Aufgabe der vorliegenden Erfindung ist es, den Problemen des Standes der Technik zu begegnen. Insbesondere soll eine Möglichkeit gefunden werden, die Dauer des Heizbetriebs des Windenergieanlagengenerators nach einer längeren Stillstandzeit gegenüber den bekannten Lösungen zu reduzieren. Jedenfalls soll eine Alternative zum aus dem Stand der Technik Bekannten gefunden werden.

Hierzu schlägt die Erfindung ein Verfahren zum Betreiben eines Windenergieanlagengenerators einer Windenergieanlage in einem Heizbetrieb vor. Der Windenergieanlagengenerator umfasst einen Rotor und einen Stator. Der Stator weist ein erstes Dreiphasensystem mit drei ersten Strängen, die auch als erste Phasen bezeichnet werden können, und ein zweites Dreiphasensystem mit drei zweiten Strängen, die auch als zweite Phasen bezeichnet werden können, auf. Der Rotor ist eingerichtet, ein Magnetfeld zu erzeugen und während einer Rotation einen elektrischen Strom in das erste Dreiphasensystem und das zweite Dreiphasensystem des Stators einzuprägen. Das erste Dreiphasensystem entspricht vorzugsweise einem aus den drei ersten Strängen verketteten System, bei dem Enden jedes der ersten Stränge vorzugsweise in einem Sternpunkt elektrisch leitend verbunden sind. Das zweite Dreiphasensystem entspricht einem aus den drei zweiten Strängen verketteten System, bei dem Enden jedes der zweiten Stränge in dem Sternpunkt oder einem weiteren Sternpunkt elektrisch leitend verbunden sind.

Vorzugsweise umfasst jeder Strang mehrere parallelgeschaltete Teilstränge. Vorzugsweise umfasst der Stator eine Vielzahl von Nuten, wobei in jeder oder zumindest der Mehrheit der Nuten ein Strang oder ein Teilstrang eines der Dreiphasensysteme eingebracht ist, das einem anderen Dreiphasensystem entspricht, als das Dreiphasensystem, dem die Stränge oder Teilstränge in den benachbarten Nuten zugeordnet sind. Zusammengefasst gilt demnach für die Mehrzahl der Nuten, dass Stränge oder Teilstränge in benachbarten Nuten demnach unterschiedlichen Dreiphasensystemen der zwei Dreiphasensysteme zugeordnet sind.

Ferner umfasst das erste Dreiphasensystem mindestens einen ersten Schalter zum Kurzschließen der ersten Stränge in einem geschlossenen Zustand des ersten Schalters und zum Leerlaufenlassen der ersten Stränge in einem geöffneten Zustand des ersten Schalters. Das zweite Dreiphasensystem weist ferner einen zweiten Schalter zum Kurzschließen der zweiten Stränge in einem geschlossenen Zustand des zweiten Schalters und zum Leerlaufenlassen der zweiten Stränge in einem geöffneten Zustand des zweiten Schalters auf.

Ein Kurzschließen der Stränge eines Dreiphasensystems entspricht einem elektrischen Verbinden der Enden der Stränge eines Dreiphasensystems, die nicht bereits über den Sternpunkt miteinander elektrisch leitend verbunden sind. Ein Leerlaufenlassen entspricht einem Zustand des Schalters, in dem ein elektrischer Strom nicht von einem der Enden der Stränge eines Dreiphasensystems, die nicht mit dem Sternpunkt verbunden sind, in ein anderes der Enden der Stränge des Dreiphasensystems, die nicht mit dem Sternpunkt verbunden sind, fließen kann.

Ferner weist der Heizbetrieb eine erste Phase auf. Gemäß dem Verfahren wird in der ersten Phase des Heizbetriebs der erste Schalter in den geschlossenen Zustand und der zweite Schalter in den geöffneten Zustand oder der erste Schalter in den geöffneten Zustand und der zweite Schalter in den geschlossenen Zustand geschaltet.

Erfindungsgemäß wurde erkannt, dass ein Strom, der in eines der Dreiphasensysteme durch den Kurzschluss fließt, durch einen Strom ergänzt wird, der nicht in das sich im Leerlauf befindende andere Dreiphasensystem aufgrund des im anderen Dreiphasensystem fehlenden Gegenfelds fließen kann. Ferner besteht ein quadratischer Zusammenhang zwischen dem induzierten Strom und der Wärmeleistung, so dass sich im kurzgeschlossenen Dreiphasensystem ein Strom mit der quadratischen Amplitude der Amplitude des Stroms einstellt, der sich jeweils in jedem der Dreiphasensysteme einstellen würde, wenn diese beide kurzgeschlossen wären. Eine so erhöhte Verlustleistung oder Wärmeleistung führt somit zu einem schnelleren Aufwärmen. Durch abwechselndes Kurschließen des beiden Dreiphasensysteme ist somit ein insgesamt schnellerer Aufwärmvorgang möglich.

Gemäß einer ersten Ausführungsform wird für jedes der Dreiphasensysteme jeweils ein Isolationswert, der vorzugsweise eine Isolation des Dreiphasensystems, insbesondere der Stränge des Dreiphasensystems, gegenüber einem Erdpotential anzeigt, ermittelt. Beispielsweise wird zwischen einem der Stränge und dem Erdpotential eine Spannung, beispielsweise eine Gleichspannung, beispielsweise im Bereich von 300 Volt, angelegt und ein Widerstand zwischen dem Strang und dem Erdpotential ermittelt. Hierzu wird beispielsweise eine Amplitude eines Stroms im Strang gemessen, der durch die angelegte Spannung erzeugt wird. Ist dieser Widerstand kleiner als ein vordefinierter Schwellenwert, der auch als Isolationsschwellenwert bezeichnet werden kann, wird vorzugsweise von einer unzureichenden Isolation ausgegangen. Der Isolationsschwellenwert beträgt vorzugsweise 100 kΩ. Gemäß dieser Ausführungsform wird in der ersten Phase der Schalter des Dreiphasensystems in den geschlossenen Zustand überführt, dessen Strang den ermittelten Isolationswert aufweist, der die geringste Isolation anzeigt.

Vorzugsweise wird somit zuerst das Dreiphasensystem erwärmt, das die schlechteste Isolation aufweist. Möglicherweise kann so, insbesondere, wenn bei einer weiteren Messung alle weiteren Isolationswerte oberhalb eines vordefinierten Isolationsschwellenwerts liegen, auf ein Beheizen des bis dahin nicht geheizten Dreiphasensystems verzichtet werden. Eine weitere Beschleunigung des Beheizens des Generatorstators ist somit möglich.

Gemäß einer weiteren Ausführungsform wird die erste Phase dann oder nur dann ausgeführt, wenn nur einer der ermittelten Isolationswerte unterhalb eines Isolationsschwellenwerts liegt, der andere der zwei ermittelten Isolationswerte also auf oder oberhalb des Isolationsschwellenwerts liegt. Vorzugsweise wird im Fall, dass beide Isolationswerte unterhalb des Isolationsschwellenwerts liegen, vor der ersten Phase ein Heizbetrieb ausgeführt, bei dem der erste Schalter und der zweite Schalter in den geschlossenen Zustand geschaltet werden oder geschaltet bleiben. Eine solche vor der ersten Phase liegende Vorphase wird vorzugsweise für einen vordefinierten oder von dem oder den Isolationswerten abhängigen Zeitraum ausgeführt. Nach der Vorphase können dann die Isolationswerte jeweils für jedes der Dreiphasensysteme neu ermittelt werden und die erste Phase kann ausgeführt werden, wenn nur noch einer der Isolationswerte unterhalb des Isolationsschwellenwerts liegt.

Es wurde erkannt, dass eine Leerlaufspannung im leerlaufenden Dreiphasensystem während des Kurzschlusses des anderen Dreiphasensystems sehr gering im Vergleich zu einer Leerlaufspannung der Dreiphasensysteme ist, wenn beide Dreiphasensysteme gleichzeitig im Leerlauf betrieben würden. Dieser Effekt lässt sich vorzugsweise auch noch maximieren, wenn eine vordefinierte oder geeignete räumliche Anordnung der Stränge der beiden Dreiphasensysteme, wie in später folgenden Ausführungsformen gezeigt ist, vorgenommen wird. Die im Vergleich geringere Leerlaufspannung im leerlaufenden Dreiphasensystem wird durch das Gegenfeld des im kurzgeschlossenen Dreiphasensystem fließenden Stroms verursacht. Durch die Absenkung der Leerlaufspannung ist es möglich eines der Dreiphasensysteme im Leerlauf auch bei verringerten Isolationswerten beider Dreiphasensysteme zu betreiben, ohne dass die Gefahr eines Erdschlusses des leerlaufenden Dreiphasensystems besteht. Sind jedoch beide Isolationswert unter dem Isolationsschwellenwert, wird vorsorglich ein normaler Heizbetrieb ohne leerlaufendes Dreiphasensystem ausgeführt, um Erdschlüsse vollständig auszuschließen.

Gemäß einer weiteren Ausführungsform ist oder wird ein Minimalisolationsschwellenwert definiert. Der Minimalisolationsschwellenwert ist geringer als der Isolationsschwellenwert. Der Isolationsschwellenwert beträgt beispielsweise 100 kΩ und der der Minimalisolationsschwellenwert beträgt beispielsweise 50 kΩ. Gemäß dieser Ausführungsformwird die erste Phase dann oder nur dann ausgeführt, wenn ein ermittelter Isolationswert oder beide ermittelten Isolationswerte unterhalb des Isolationsschwellenwerts und beide ermittelten Isolationswerte oberhalb des Minimalisolationsschwellenwerts liegen. Vorzugsweise wird im Fall, dass beide Isolationswerte unterhalb des Minimalisolationsschwellenwerts liegen, vor der ersten Phase ein Heizbetrieb ausgeführt, bei dem der erste Schalter und der zweite Schalter in den geschlossenen Zustand geschaltet werden oder geschaltet bleiben. Diese vor der ersten Phase liegende Vorphase wird vorzugsweise für einen vordefinierten oder von dem oder den Isolationswerten abhängigen Zeitraum ausgeführt. Nach der Vorphase können dann die Isolationswerte der beiden Dreiphasensysteme jeweils neu ermittelt werden und die erste Phase kann ausgeführt werden, wenn beide der Isolationswerte oberhalb des Minimalisolationsschwellenwerts liegen.

Gegenüber dem vorhergehenden Ausführungsbeispiel wird eine abgestufte Sicherung gegen Erdschlüsse durch Bereitstellen des Minimalisolationsschwellenwerts geschaffen. Die erste Phase kann also demnach bereits ausgeführt werden, wenn die Isolationswerte unter dem Isolationsschwellenwert aber oberhalb des Minimalisolationsschwellenwerts liegen, wodurch der Heizprozess insgesamt beschleunigt wird. Der Minimalisolationsschwellenwert dient weiter zur Vorsorge gegen Erdschlüsse eines leerlaufenden Dreiphasensystems, die auftreten könnten, wenn dieses Dreiphasensystem einen Isolationswert unterhalb des Minimalisolationsschwellenwerts aufweisen würde.

Gemäß einer weiteren Ausführungsform umfasst das Verfahren eine zweite Phase. Die zweite Phase folgt auf die erste Phase. In der zweiten Phase werden der erste Schalter und der zweite Schalter umgeschaltet, also aus ihrem Zustand, den sie in der ersten Phase aufweisen, in den jeweils anderen Zustand umgeschaltet. Befindet sich also der erste Schalter in der ersten Phase in einem geschlossenen Zustand, wird dieser in der zweiten Phase in den geöffneten Zustand überführt und befindet sich der zweite Schalter in der ersten Phase in dem geöffneten Zustand, so wird dieser in der zweiten Phase in den geschlossenen Zustand überführt. Befindet sich der erste Schalter in der ersten Phase im geöffneten Zustand, wird er in der zweiten Phase in den geschlossenen Zustand überführt und befindet sich der zweite Schalter in der ersten Phase im geschlossenen Zustand, so wird dieser in der zweiten Phase in den geöffneten Zustand überführt. In der zweiten Phase wird demnach das Dreiphasensystem zum Beheizen des Stators verwendet, das in der ersten Phase nicht zum Beheizen verwendet wurde. Wurde demnach in der ersten Phase mit dem ersten Dreiphasensystem der Stator beheizt, so wird in der zweiten Phase der Stator mit dem zweiten Dreiphasensystem beheizt oder umgekehrt.

Gemäß einer weiteren Ausführungsform werden nach der ersten Phase weitere Isolationswerte ermittelt, insbesondere für jedes der Dreiphasensysteme jeweils ein weiterer Isolationswert, und die zweite Phase nur dann ausgeführt, wenn mindestens einer der weiteren Isolationswerte unter einem Isolationsschwellenwert, beispielsweise 100 kΩ, liegt. Somit kann darauf verzichtet werden, die zweite Phase auszuführen, wenn der Isolationswert des nicht zum Beheizen genutzten Systems ohnehin ausreichend war und ein Beheizen des anderen Dreiphasensystems in einer zweiten Phase somit nicht nötig ist.

Gemäß einer weiteren Ausführungsform werden nach der ersten Phase weitere Isolationswerte bestimmt und in einer auf die erste Phase folgenden weiteren Phase der Schalter des Dreiphasensystems in den geschlossenen Zustand überführt, das den geringsten Isolationswert aufweist. Die weiteren Isolationswerte werden vorzugsweise wie die Isolationswerte, die vor der ersten Phase bestimmt werden, bestimmt.

Gemäß einer weiteren Ausführungsform wird eine Feuchtigkeit des Stators durch Ermitteln mindestens eines Feuchtigkeitswerts ermittelt und das Verfahren nur dann ausgeführt, wenn der gemessene Feuchtigkeitswert oberhalb von einem Feuchtigkeitsschwellenwert liegt. Der Feuchtigkeitswert kann unmittelbar über ein Messgerät, wie ein Hygrometer, bestimmt werden. Alternativ wird der Feuchtigkeitswert in Abhängigkeit von einer Temperatur des Stators und einer Lufttemperatur in oder außerhalb der Gondel, in der der Stator angeordnet ist, bestimmt. Vorzugsweise entspricht der Feuchtigkeitswert der Differenz zwischen den ermittelten Temperaturen des Stators und der Luft. Besonders bevorzugt wird der Feuchtigkeitsschwellenwert als ein Wert ermittelt, so dass Feuchtigkeitswerte, die Differenzen zwischen den gemessenen Temperaturen anzeigen und eine kältere Lufttemperatur als eine Temperatur des Stators anzeigen, unterhalb des Feuchtigkeitsschwellenwerts liegen. Feuchtigkeitswerte, die anzeigen, dass die Temperatur des Stators unterhalb der Außentemperatur der Gondel liegt, deuten hingegen auf einen Feuchtigkeitswert hin, der oberhalb des Feuchtigkeitsschwellenwerts liegt. Vorzugsweise liegt der Feuchtigkeitsschwellenwert somit im Bereich eines Feuchtigkeitswerts, der anzeigt, dass keine Temperaturdifferenz zwischen dem Stator und der Luft vorherrscht.

Durch Bestimmen des Feuchtigkeitswerts und Vergleichen des Feuchtigkeitswerts mit einem Feuchtigkeitsschwellenwert kann im Fall, dass der Feuchtigkeitswert keine Feuchtigkeit am Stator anzeigt, eine Windenergieanlage ohne Erwärmung gestartet werden. Ein Beheizen des Stators erfolgt somit nur im Fall, dass der Feuchtigkeitswert die Wahrscheinlichkeit einer Feuchtigkeit des Stators anzeigt.

Gemäß einer weiteren Ausführungsform wird die erste Phase für eine Dauer, die auch als erste Dauer bezeichnet wird, ausgeführt. Die Dauer der ersten Phase wird in Abhängigkeit vom ermittelten Isolationswert, insbesondere der die geringste Isolation aufweist, ermittelt. Vorzugsweise ist die Dauer der ersten Phase je länger, desto geringer der ermittelte Isolationswert ist. Alternativ oder zusätzlich ist die Dauer der ersten Phase abhängig von einem ermittelten Feuchtigkeitswert, der die Feuchtigkeit des Stators angibt. Zusätzlich oder alternativ weist auch die zweite Phase eine Dauer auf. Die zweite Phase wird demnach für eine Dauer, die auch als zweite Dauer bezeichnet wird, ausgeführt. Die Dauer der zweiten Phase ist abhängig vom ermittelten weiteren Isolationswert, insbesondere der die geringste Isolation anzeigt, und zusätzlich oder alternativ von dem ermittelten Feuchtigkeitswert oder einem weiteren Feuchtigkeitswert, der wie der Feuchtigkeitswert vor der ersten Phase als weiterer Feuchtigkeitswert nach der ersten Phase ermittelt wird.

Durch Festlegen einer variablen ersten Dauer und/oder einer variablen zweiten Dauer ist es möglich, die erste Phase im Fall nur geringer am Stator vorherrschender Isolationsprobleme durch Feuchtigkeit sehr kurz zu wählen. Nur im Fall sehr großer Isolationsprobleme durch hohe Feuchtigkeit am Stator ist eine lange Dauer des Beheizens nötig.

Außerdem betrifft die Erfindung ein Windenergieanlagengeneratorsystem mit einem Windenergieanlagengenerator. Das Windenergieanlagengeneratorsystem ist eingerichtet, ein Verfahren nach einer der vorgenannten Ausführungsformen auszuführen. Der Windenergieanlagengenerator weist somit einen Rotor und einen Stator auf, wobei der Stator ein erstes Dreiphasensystem mit drei ersten Strängen und ein zweites Dreiphasensystem mit drei zweiten Strängen aufweist. Der Rotor ist eingerichtet, ein Magnetfeld zu erzeugen und während einer Rotation einen elektrischen Strom in das erste Dreiphasensystem und das zweite Dreiphasensystem einzuprägen.

Das erste Dreiphasensystem umfasst ferner einen ersten Schalter zum Kurzschließen der ersten Stränge in einem geschlossenen Zustand und zum Leerlaufenlassen der ersten Stränge in einem geöffneten Zustand. Das zweite Dreiphasensystem umfasst mindestens einen zweiten Schalter zum Kurschließen der zweiten Stränge in einem geschlossenen Zustand und zum Leerlaufenlassen der zweiten Stränge in einem geöffneten Zustand. Das Windenergieanlagengeneratorsystem ist eingerichtet, in einer ersten Phase eines Heizbetriebs den ersten Schalter in den geöffneten Zustand und den zweiten Schalter in den geschlossenen Zustand oder den ersten Schalter in einen geschlossenen Zustand und den zweiten Schalter in einen geöffneten Zustand zu schalten. Die Schaltung wird vorzugsweise durch eine Steuerung des Windenergieanlagengeneratorsystems, die eingerichtet ist, die Schalter zu schalten, ausgeführt.

Gemäß einer Ausführungsform des Windenergieanlagengeneratorsystems weist dieses ein Isolationsmessgerät und/oder ein Feuchtigkeitsmessgerät auf. Das Isolationsmessgerät ist eingerichtet, mindestens einen Isolationswert jedes der beiden Dreiphasensysteme zu ermitteln. Vorzugsweise ist das Isolationsmessgerät eingerichtet, einen Isolationswert für jeden der Stränge der Dreiphasensysteme gegenüber einem Erdpotential zu messen. Isolationswerte beschreiben beispielsweise einen Widerstand zwischen den jeweiligen Strängen und einem Erdpotential. Isolationswerte sind demnach vorzugsweise in Ohm bestimmt. Das Feuchtigkeitsmessgerät ist eingerichtet, eine Feuchtigkeit des Stators zu bestimmen, die in Form von Feuchtigkeitswerten angegeben werden. Vorzugsweise weist das Windenergieanlagengeneratorsystem eine Steuerung auf, die eingerichtet ist, eine Dauer zumindest der ersten Phase in Abhängigkeit vom ermittelten Isolationswert oder Feuchtigkeitswert zu bestimmen.

Gemäß einer weiteren Ausführungsform weist jeder der Stränge beider Dreiphasensysteme mehrere parallelgeschaltete Teilstränge auf. Vorzugsweise umfasst jeder der Stränge vier parallelgeschaltete Teilstränge. Vorzugsweise ist jeder der Teilstränge, die parallelgeschaltet sind, in unterschiedlichen Vierteln des Stators angeordnet. Mit jedem der Teilstränge werden jeweils mehrere in Reihe geschaltete Spulen im Stator gebildet. Vorzugsweise verläuft somit jeder Teilstrang jeweils durch ihm zugeordnete Nuten des Stators und bildet mehrere Spulen. Die Spulen eines Teilstrangs sind hierbei über ein Viertel des Stators angeordnet, so dass alle vier parallelgeschalteten Teilstränge eines Strangs über den gesamten Umlauf des Stators verteilt sind.

Gemäß einer weiteren Ausführungsform weist der Stator mehrere Nuten auf und zumindest in der Mehrheit der Nuten oder in allen Nuten ist ein Strang oder ein Teilstrang eines der Dreiphasensysteme eingebracht, der einem anderen Dreiphasensystem zugeordnet ist, als der Strang oder die Teilstränge, die in den zu der Nut benachbarten Nuten eingebracht sind.

Gemäß einer weiteren Ausführungsform ist mindestens ein erster Gleichrichter bereitgestellt, mit dem die Stränge des ersten Dreiphasensystems eingangsseitig verbunden sind. Ferner ist mindestens ein zweiter Gleichrichter bereitgestellt, mit dem die Stränge des zweiten Dreiphasensystems eingangsseitig verbunden sind. Der erste Gleichrichter und der zweite Gleichrichter sind jeweils eingerichtet, eine eingangsseitige Spannung in eine Gleichspannung zu wandeln und diese ausgangsseitig als Gleichspannung an zwei Ausgangspotentialen, die vorzugsweise den Gleichspannungsausgang bilden, auszugeben. Der erste Schalter ist im ersten Gleichrichter bereitgestellt und der zweite Schalter ist im zweiten Gleichrichter bereitgestellt.

Gemäß einer weiteren Ausführungsform sind der erste Gleichrichter und der zweite Gleichrichter jeweils aktive Gleichrichter. Die aktiven Gleichrichter umfassen jeweils sechs Schalter, wobei der erste Gleichrichter sechs erste Schalter und der zweite Gleichrichter sechs zweite Schalter aufweist. Die Schalter in den jeweiligen Gleichrichtern verbinden jeweils jeden der Stränge mit einem von zwei elektrischen Potentialen, die den Ausgang oder die zwei Ausgangspotentiale bilden. Im Kurzschlusszustand werden alle Schalter des jeweiligen Gleichrichters geschlossen.

Gemäß einer weiteren Ausführungsform sind der erste Gleichrichter und der zweite Gleichrichter jeweils passive Gleichrichter. Die passiven Gleichrichter umfassen jeweils einen Schalter, wobei der erste Gleichrichter einen ersten Schalter und der zweite Gleichrichter einen zweiten Schalter aufweist. Die Schalter sind jeweils zwischen zwei Ausgangspotentiale, die vorzugsweise den Gleichspannungsausgang bilden, geschaltet, um diese im Kurzschlusszustand kurzuschließen und im Leerlaufzustand unverbunden zu lassen.

Außerdem betrifft die Erfindung eine Windenergieanlage mit einem Windenergieanlagengeneratorsystem nach einer der vorgenannten Ausführungsformen. Alternativ oder zusätzlich ist die Windenergieanlage eingerichtet, ein Verfahren nach einer der vorgenannten Ausführungsformen auszuführen.

Weitere Ausführungsformen ergeben sich anhand der in den Figuren näher erläuterten Ausführungsbeispiele. Hierbei zeigen:
- Fig. 1: eine Windenergieanlage,
- Fig. 2: ein Windenergieanlagengeneratorsystem,
- Fig. 3: einen Ausschnitt eines Windenergieanlagengeneratorstators,
- Fig. 4: einen aktiven Wechselrichter im Leerlaufzustand,
- Fig. 5: einen aktiven Wechselrichter im Kurzschlusszustand,
- Fig. 6: einen passiven Gleichrichter,
- Fig. 7: die Schalterstellung der Gleichrichter in einer ersten oder zweiten Phase und
- Fig. 8: die Schritte des Verfahrens gemäß einem Ausführungsbeispiel.

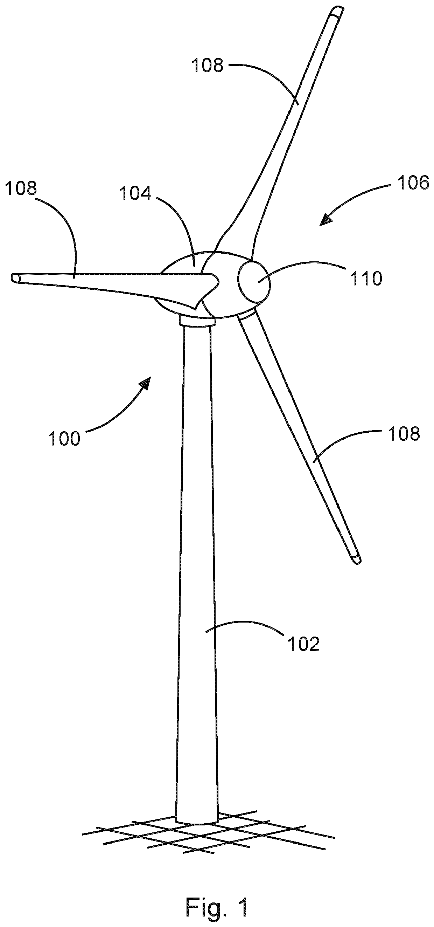

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

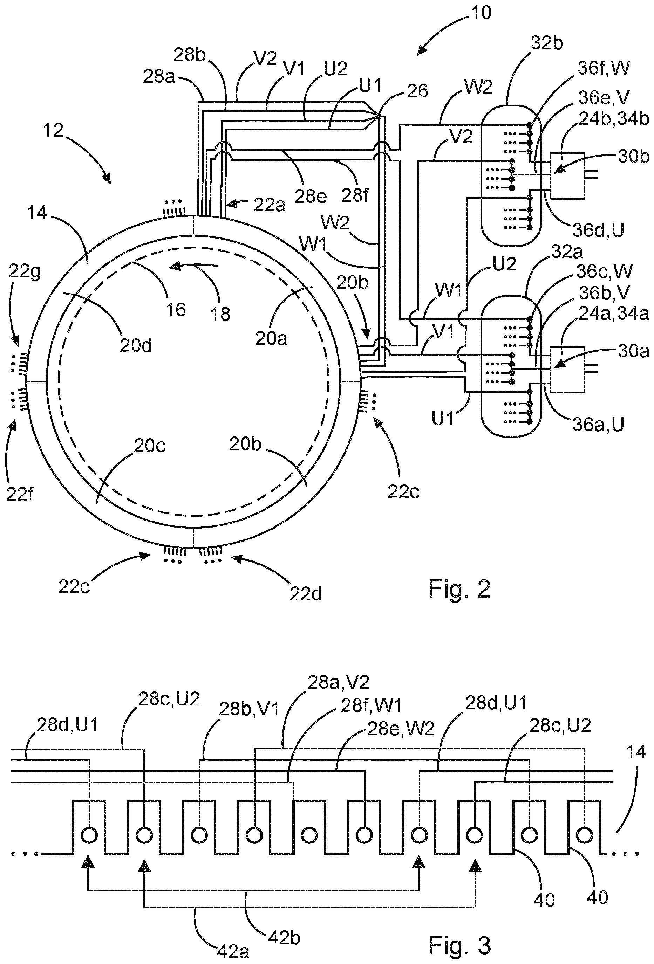

Fig. 2 zeigt ein Windenergieanlagengeneratorsystem 10, das einen Windenergieanlagengenerator 12 mit einem Stator 14 und einem Rotor 16 aufweist. Mit dem Rotor 16 wird ein Magnetfeld erzeugt, das durch Rotation in Drehrichtung 18 einen Strom in Spulen erzeugt, die über den Umfang des Stators 14 verteilt und in Fig. 2 nicht im Detail dargestellt sind. Der Stator 14 ist im dargestellten Ausführungsbeispiel funktional in vier Viertel 20a, 20b, 20c, 20d aufgeteilt. Stellvertretend zur Beschreibung der Verteilung der Spulen sind in Fig. 2 die dem jeweiligen Viertel 20a, 20b, 20c, 20d zugeordneten Anschlüsse 22a, 22b, 22c, 22d, 22e, 22f, 22g, 22h dargestellt, mit denen Stränge oder Teilstränge gebildet werden, die die Spulen umfassen. Die Anschlüsse 22a, 22b des Viertels 20a sind stellvertretend dargestellt für alle weiteren Viertel 20b, 20c, 20d mit Gleichrichtern 24a, 24b sowie einem Sternpunkt 26 verbunden. Die Gleichrichter 24a, 24b dienen zum Wandeln des in die Spulen des Stators 14 induzierten Stroms, der durch die Stränge, mit denen die Spulen gebildet werden, zum Gleichrichter 24a, 24b fließt. Der induzierte Strom in den Dreiphasensystemen entspricht einem Dreiphasenwechselstrom, der in einen Gleichstrom gleichgerichtet wird und im normalen Betrieb an Potentialausgängen der Gleichrichter bereitgestellt wird.

Durch jedes Viertel 20a, 20b, 20c, 20d des Generators verlaufen sechs Teilstränge 28a, 28b, 28c, 28d, 28e, 28f vom Sternpunkt 26 bis zu eingangsseitigen Anschlüssen 30a, 30b der Gleichrichter 24a, 24b. Das Viertel 20a des Generatorstators 14 umfasst demnach zwei Dreiphasensysteme, nämlich ein erstes Dreiphasensystem 32a, das dem Gleichrichter 24a zugeordnet ist, so dass der Gleichrichter 24a auch als erster Gleichrichter 34a bezeichnet werden kann. Außerdem ist ein zweites Dreiphasensystem 32b dargestellt, das dem zweiten Gleichrichter 24b zugeordnet ist, der somit auch als zweiter Gleichrichter 34b bezeichnet werden kann.

Die Teilstränge 28a, 28b, 28c, 28d, 28e, 28f sind jeweils einem der Stränge 36a, 36b, 36c, 36d, 36e, 36f zugeordnet. Die Dreiphasensysteme 32a, 32b umfassen jeweils drei Stränge 36a, 36b, 36c, 36d, 36e, 36f, wobei die Stränge 36a, 36b, 36c des ersten Dreiphasensystems 32a auch als Phasen U, V, W des ersten Dreiphasensystems 32a bezeichnet werden können. Die drei Stränge 36d, 36e, 36f können auch als Phasen U, V, W des zweiten Dreiphasensystems 32b bezeichnet werden.

Die Stränge 36a, 36b, 36c, 36d, 36e, 36f teilen sich jeweils in vier Teilstränge für jedes Viertel 20a, 20b, 20c, 20d auf, wobei nur die Teilstränge 28a, 28b, 28c, 28d, 28e, 28f zur besseren Übersichtlichkeit dargestellt sind. Entsprechend zu den Strängen können die Teilstränge 28a, 28b, 28c, 28d, 28e, 28f auch als Teilphasen bezeichnet werden, nämlich die Teilstränge 28b, 28d, 28f als die Teilphasen U1, V1, W1 des ersten Dreiphasensystems 32a und die Teilstränge 28a, 28c, 28e als Teilphasen U2, V2, W2 des zweiten Dreiphasensystems 32b. Zur besseren Übersichtlichkeit sind für die weiteren Viertel 20b, 20c, 20d die Anschlüsse 22c, 22d, 22e, 22f, 22g, 22h und für die Stränge 36a, 36b, 36c, 36d, 36e, 36f im Bereich der Gleichrichter 24a, 24b der entsprechend zugeordneten Teilstränge nur Punkte angedeutet. Eine Verschaltung der nicht dargestellten Teilstränge erfolgt mit den Gleichrichtern 24a, 24b in diesen Vierteln auf analoge Weise wie im ersten Viertel 20a. Demnach sind die vier Teilstränge in den einzelnen Vierteln am Gleichrichter parallelgeschaltet, um einen Strang zu bilden.

Gemäß einem weiteren hier nicht dargestellten Ausführungsbeispiel sind mehrere erste Gleichrichter 34a und mehrere zweite Gleichrichter 34b vorgesehen, die eingangsseitig mit ihren Eingangsanschlüssen entsprechend parallelgeschaltet sind. Entsprechend sind also mehrere erste Gleichrichter 34a mit ihren eingangsseitigen Anschlüssen 30a elektrisch leitend verbunden und alle zweiten Gleichrichter 34b mit ihren eingangsseitigen Anschlüssen 30b elektrisch leitend verbunden.

Fig. 3 zeigt die Anordnung der Teilstränge 28a, 28b, 28c, 28d, 28e, 28f in Nuten 40 des Stators 14. Es ist erkennbar, dass in benachbarten Nuten jeweils Teilstränge 28a, 28b, 28c, 28d, 28e, 28f angeordnet sind, die unterschiedlichen der beiden Dreiphasensysteme 32a, 32b zugeordnet sind. Zur besseren Übersichtlichkeit sind nur die in den Nuten 40 verlaufenden Teilstränge 28a, 28b, 28c, 28d, 28e, 28f ohne ihre Wickelköpfe dargestellt. Die Wickelköpfe sind durch die Pfeile 42a, 42b angedeutet. Der Teilstrang 28c, der hier zweimal durch Nuten verläuft, bildet entsprechend eine Spule in diesen beiden Nuten und der Teilstrang 28d, der ebenfalls in zwei dargestellten Nuten verläuft, bildet ebenfalls eine Spule.

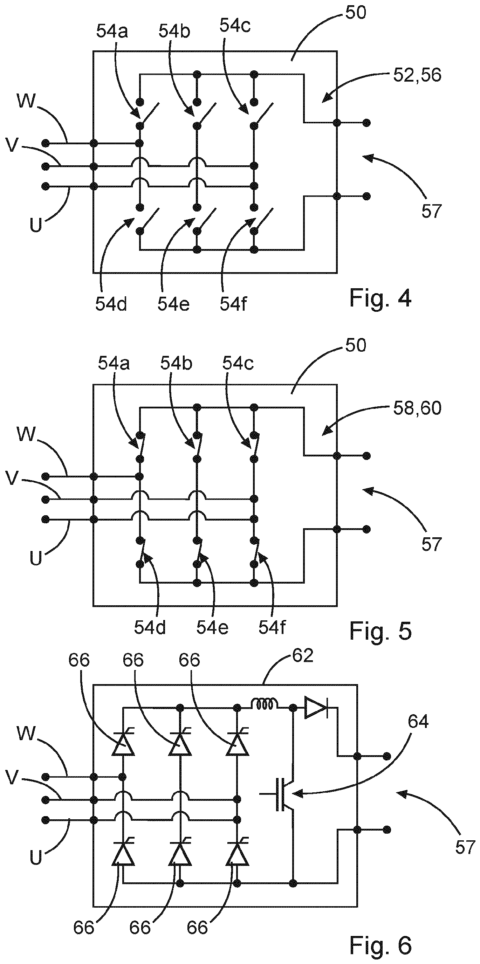

Fig. 4 zeigt einen aktiven Gleichrichter 50 in einem Leerlaufzustand 52. Im Leerlaufzustand 52 sind Schalter 54a, 54b, 54c, 54d, 54e, 54f geöffnet. Die Schalter 54a, 54b, 54c, 54d, 54e, 54f befinden sich in einem geöffneten Zustand 56, um die Stränge 36a, 36b, 36c, 36d, 36e, 36f leerlaufen zu lassen. Potentialausgänge 57, die den Gleichspannungsausgang des Gleichrichters 50 bilden, sind so nicht kurzgeschlossen, also elektrisch getrennt. Die Schalter 54a, 54b, 54c, 54d, 54e, 54f werden entsprechend als erste Schalter bezeichnet, wenn der aktive Gleichrichter 50 einem ersten Gleichrichter 34a entspricht. Entsprechend werden die Schalter 54a, 54b, 54c, 54d, 54e, 54f als zweite Schalter bezeichnet, wenn der Gleichrichter 50 einem zweiten Gleichrichter 34b entspricht.

Fig. 5 zeigt den aktiven Gleichrichter 50 in einem Kurzschlusszustand 58, bei dem die Schalter 54a, 54b, 54c, 54d, 54e, 54f geschlossen sind. Die Schalter 54a, 54b, 54c, 54d, 54e, 54f befinden sich somit in einem geschlossenen Zustand 60, so dass die Stränge 36a, 36b, 36c, 36d, 36e, 36f oder die Potentialausgänge 57 kurzgeschlossen, also elektrisch leitend verbunden sind.

Fig. 6 zeigt einen passiven Gleichrichter 62 mit einem Schalter 64, der geöffnet oder geschlossen werden kann, um eine über die Thyristoren 66 gleichgerichtete Spannung kurzzuschließen oder leerlaufen zu lassen. Der Schalter entspricht, wenn der passive Gleichrichter 62 ein erster Gleichrichter 34a ist, einem ersten Schalter und wenn der passive Gleichrichter 62 ein zweiter Gleichrichter 34b ist, einem zweiten Schalter.

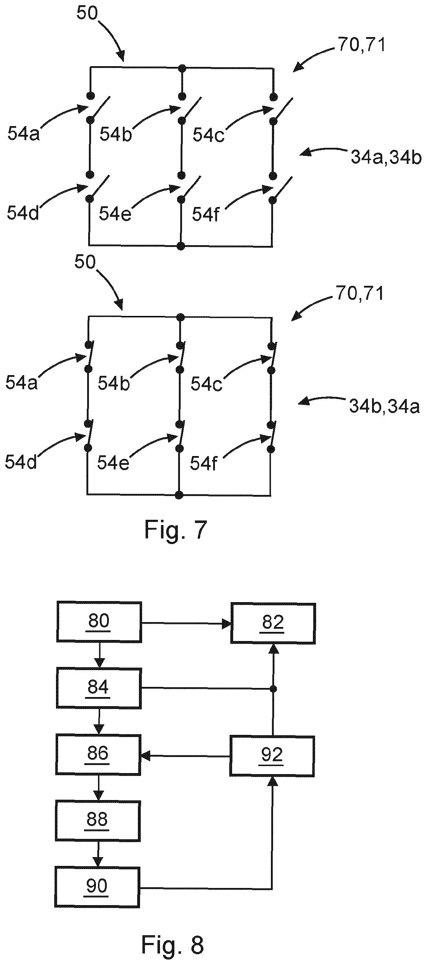

Fig. 7 zeigt exemplarisch die Schalterstellungen in einer ersten Phase 70 oder in der zweiten Phase 71, wobei die oberen Schalter 54a, 54b, 54c, 54d, 54e, 54f ersten Schaltern 72a, 72b, 72c, 72d, 72e, 72f eines ersten Gleichrichters 34a entsprechen, der ein aktiver Gleichrichter 50 ist. Die unteren Schalter 54a, 54b, 54c, 54d, 54e, 54f entsprechen zweiten Schaltern 72b eines zweiten Gleichrichters 34b, der ebenfalls ein aktiver Gleichrichter 50 ist. Es ist erkennbar, dass die ersten Schalter 72a, 72b, 72c, 72d, 72e, 72f in einem geöffneten Zustand und die zweiten Schalter 72b in einem geschlossenen Zustand sind.

Fig. 8 zeigt die Schritte des Verfahrens gemäß einem Ausführungsbeispiel. In einem optionalen Schritt 80 wird zunächst eine Feuchtigkeit des Stators durch Messen eines Feuchtigkeitswerts bestimmt. Liegt der Feuchtigkeitswert unter einem Feuchtigkeitsschwellenwert, wird im Schritt 82 das Verfahren beendet. Liegt der Feuchtigkeitswert oberhalb des Feuchtigkeitsschwellenwerts oder ist der Schritt 80 nicht vorhanden, wird im Schritt 84 ein Isolationswert für jedes der Dreiphasensysteme 32a, 32b bestimmt. Im Schritt 86 werden die Schalter 54a, 54b, 54c, 54d, 54e, 54f des Dreiphasensystems 32a, 32b geschlossen, das einen Strang aufweist, dessen Isolationswert am geringsten ist und insbesondere unterhalb eines Isolationsschwellenwerts liegt. Im Schritt 88 werden die Schalter 54a, 54b, 54c, 54d, 54e, 54f des anderen Dreiphasensystems 32a, 32b, das insbesondere einen Isolationswert aufweist, der auf oder oberhalb des Isolationsschwellenwerts liegt, geöffnet. Diese erste Phase wird für eine Dauer 90 ausgeführt. Gemäß einer hier nicht dargestellten Alternative, werden im Fall, dass beide Isolationswerte unterhalb des Isolationsschwellenwerts oder unterhalb eines Minimalisolationsschwellenwerts liegen, alle Schalter 54a, 54b, 54c, 54d, 54e, 54f beider Dreiphasensysteme 32a, 32b geschlossen und erst nach Ablauf eines vordefinierten Zeitraums erneut Schritt 84 ausgeführt.

Nach Ablauf der Dauer 90 werden weitere Isolationswerte in einem Schritt 92 erfasst und im Fall, dass alle Isolationswerte oberhalb eines Isolationsschwellenwerts liegen, das Verfahren im Schritt 82 beendet. Anderenfalls werden die Schritte 86 und 88 erneut als zweite Phase ausgeführt. Dies wiederholt sich bis alle Isolationswerte oberhalb des Isolationsschwellenwerts liegen und das Verfahren im Schritt 82 beendet wird.

### Bezugszeichenliste

- 10: Windenergieanlagengeneratorsystem
- 12: Generator
- 14: Stator
- 16: Rotor
- 18: Drehrichtung
- 20a - 20d: Viertel
- 22a - 22h: Anschlüsse
- 24a, 24b: Gleichrichter
- 26: Sternpunkt
- 28a - 28f: Teilstränge
- 30a, 30b: Anschlüsse
- 32a, 32b: Dreiphasensysteme
- 34a, 34b: Gleichrichter
- 36a - 36f: Stränge
- 40: Nuten
- 42a, 42b: Pfeile
- 50: aktiver Gleichrichter
- 52: Leerlaufzustand
- 54a - 54f: Schalter
- 56: geöffneter Zustand
- 57: Potentialausgänge
- 58: Kurzschlusszustand
- 60: geschlossener Zustand
- 62: passiver Gleichrichter
- 64: Schalter
- 66: Thyristoren
- 70: erste Phase
- 71: zweite Phase
- 72a - 72f: Schalter
- 80: Bestimmen Feuchtigkeit des Stators
- 82: Beenden Verfahren
- 84: Bestimmen Isolationswert
- 86: Schließen Schalter
- 88: Öffnen Schalter
- 90: erste Dauer
- 92: Erfassen weitere Isolationswerte
- 100: Windenergieanlage
- 102: Turm
- 104: Gondel
- 106: aerodynamischer Rotor
- 108: Rotorblätter
- 110: Spinner
- U, V, W: Phasen
- U1, V1, W1: Teilphasen
- U2, V2, W2: Teilphasen

## Patentansprüche

1. Verfahren zum Betreiben eines Windenergieanlagengenerators (12) in einem Heizbetrieb, wobei der Windenergieanlagengenerator (12) einen Rotor (16) und einen Stator (14) aufweist und der Stator (14) ein erstes Dreiphasensystem (32a) mit drei ersten Strängen (36a, 36b, 36c) und ein zweites Dreiphasensystem (32b) mit drei zweiten Strängen (36d, 36e, 36f) aufweist, wobei der Rotor (16) eingerichtet ist, ein Magnetfeld zu erzeugen und während einer Rotation mit dem Magnetfeld einen elektrischen Strom in das erste Dreiphasensystem (32a) und das zweite Dreiphasensystem (32b) einzuprägen, wobei das erste Dreiphasensystem (32a) mindestens einen ersten Schalter (54a, 54b, 54c, 54d, 54e, 54f, 64) zum Kurzschließen der ersten Stränge (36a, 36b, 36c) in einem geschlossenen Zustand (60) und zum Leerlaufenlassen der ersten Stränge (36a, 36b, 36c) in einem geöffneten Zustand (56) aufweist und
wobei das zweite Dreiphasensystem (32b) mindestens einen zweiten Schalter (54a, 54b, 54c, 54d, 54e, 54f, 64) zum Kurzschließen der zweiten Stränge (36d, 36e, 36f) in einem geschlossenen Zustand (60) und zum Leerlaufenlassen der zweiten Stränge (36d, 36e, 36f) in einem geöffneten Zustand (56) aufweist und
der Heizbetrieb eine erste Phase (70) umfasst, wobei in der ersten Phase (70)
a) der erste Schalter (54a, 54b, 54c, 54d, 54e, 54f, 64) in den geschlossenen Zustand (60) und der zweite Schalter (54a, 54b, 54c, 54d, 54e, 54f, 64) in den geöffneten Zustand (56) oder
b) der erste Schalter (54a, 54b, 54c, 54d, 54e, 54f, 64) in den geöffneten Zustand (56) und der zweite Schalter (54a, 54b, 54c, 54d, 54e, 54f, 64) in den geschlossenen Zustand (60) geschaltet wird oder geschaltet bleibt.

2. Verfahren nach Anspruch 1, wobei das Verfahren das Ermitteln eines Isolationswerts für jedes der Dreiphasensysteme (32a, 32b) umfasst und in der ersten Phase (70) der Schalter (54a, 54b, 54c, 54d, 54e, 54f, 64) des Dreiphasensystems (32a, 32b) in den geschlossenen Zustand (60) überführt wird, dessen Isolationswert die geringste Isolation aufweist, wobei vorzugsweise
die erste Phase nur dann ausgeführt wird, wenn
a) nur einer der ermittelten Isolationswerte unterhalb eines Isolationsschwellenwerts liegt, oder
b) ein Minimalisolationsschwellenwert definiert ist und beide ermittelten Isolationswerte unterhalb des Isolationsschwellenwerts und oberhalb eines Minimalisolationsschwellenwerts liegen, wobei besonders bevorzugt
im Fall, dass beide Isolationswerte unterhalb des Isolationsschwellenwerts liegen oder im Fall, dass ein Minimalisolationsschwellenwert definiert ist und beide Isolationswerte unterhalb des Minimalisolationsschwellenwerts liegen, vor der ersten Phase ein Heizbetrieb ausgeführt wird, bei dem der erste Schalter (54a, 54b, 54c, 54d, 54e, 54f, 64) und der zweite Schalter (54a, 54b, 54c, 54d, 54e, 54f, 64) in den geschlossenen Zustand (60) geschaltet werden oder geschaltet bleiben.

3. Verfahren nach Anspruch 1 oder 2, wobei in einer zweiten Phase (71), die zeitlich auf die erste Phase (70) folgt, der in der ersten Phase (70) geöffneter Schalter (54a, 54b, 54c, 54d, 54e, 54f, 64) geschlossen wird und der in der ersten Phase (70) geschlossene Schalter (54a, 54b, 54c, 54d, 54e, 54f, 64) geöffnet wird.

4. Verfahren nach Anspruch 3, wobei nach der ersten Phase (70) mindestens ein weiterer Isolationswert der Dreiphasensysteme (32a, 32b) ermittelt wird und die zweite Phase nur ausgeführt wird, wenn mindestens einer der weiteren Isolationswerte unter einem Isolationsschwellenwert liegt, insbesondere des Dreiphasensystems, dessen Schalter (54a, 54b, 54c, 54d, 54e, 54f, 64) in der ersten Phase (70) geöffnet war.

5. Verfahren nach einem der vorhergehenden Ansprüche, wobei nach der ersten Phase (70) mehrere weitere Isolationswerte bestimmt werden und in einer auf die erste Phase (70) folgenden Phase der Schalter (54a, 54b, 54c, 54d, 54e, 54f, 64) des Dreiphasensystems (32a, 32b) in den geschlossenen Zustand (60) überführt wird, das den geringsten weiteren Isolationswert aufweist.

6. Verfahren nach einem der vorhergehenden Ansprüche, wobei ein Feuchtigkeitswert ermittelt wird, der eine Feuchtigkeit des Stators (14) anzeigt und das Verfahren nur in dem Fall ausgeführt wird, wenn der Feuchtigkeitswert oberhalb eines vordefinierten Feuchtigkeitsschwellenwerts liegt.

7. Verfahren nach einem der vorhergehenden Ansprüche, wobei die erste Phase (70) eine erste Dauer (90) aufweist, in der die erste Phase (70) ausgeführt wird und die erste Dauer (90) der ersten Phase (70) vom ermittelten Isolationswert, der insbesondere die geringste Isolation aufweist, und/oder Feuchtigkeitswert abhängig ist, und die zweite Phase (71) eine zweite Dauer aufweist, in der die zweite Phase (72) ausgeführt wird und die zweite Dauer der zweiten Phase in Abhängigkeit vom ermittelten weiteren Isolationswert, der insbesondere die geringste Isolation aufweist, und/oder des ermittelten Feuchtigkeitswerts ist.

8. Windenergieanlagengeneratorsystem (10) mit einem Windenergieanlagengenerator (12), wobei der Windenergieanlagengenerator (12) einen Rotor (16) und einen Stator (14) aufweist und der Stator (14) ein erstes Dreiphasensystem (32a) mit drei ersten Strängen (36a, 36b, 36c) und ein zweites Dreiphasensystem (32b) mit drei zweiten Strängen (36d, 36e, 36f) aufweist und wobei der Rotor (16) eingerichtet ist, ein Magnetfeld zu erzeugen und während einer Rotation einen elektrischen Strom in das erste Dreiphasensystem (32a) und das zweite Dreiphasensystem (32b) einzuprägen,
wobei das erste Dreiphasensystem (32a) mindestens einen ersten Schalter (54a, 54b, 54c, 54d, 54e, 54f, 64) zum Kurzschließen der ersten Stränge (36a, 36b, 36c) in einem geschlossenen Zustand (60) und zum Leerlaufenlassen der ersten Stränge (36a, 36b, 36c) in einem geöffneten Zustand und
wobei das zweite Dreiphasensystem (32b) mindestens einen zweiten Schalter (54a, 54b, 54c, 54d, 54e, 54f, 64) zum Kurschließen der zweiten Stränge (36d, 36e, 36f) in einem geschlossenen Zustand (60) und zum Leerlaufenlassen der zweiten Stränge (36d, 36e, 36f) in einem geöffneten Zustand (56) aufweist und
wobei das Windenergieanlagengeneratorsystem (10) eingerichtet ist, ein Verfahren nach einem der Ansprüche 1 bis 7 auszuführen.

9. Windenergieanlagengeneratorsystem (10) nach Anspruch 8, umfassend ein Isolationsmessgerät zum Bestimmen mindestens eines Isolationswerts und/oder mindestens eines weiteren Isolationswerts und/oder ein Feuchtigkeitsmessgerät zum Bestimmen mindestens eines Feuchtigkeitswerts, der eine Feuchtigkeit des Stators (14) angibt, und vorzugsweise eine Steuerung zum Bestimmen einer ersten Dauer (90) zumindest der ersten Phase (70) in Abhängigkeit von den Isolationswerten und/oder Feuchtigkeitswerten.

10. Windenergieanlagengeneratorsystem (10) nach Anspruch 8 oder 9, wobei jeder der Stränge (36a, 36b, 36c, 36d, 36e, 36f) mehrere, vorzugsweise vier, parallelgeschaltete Teilstränge (28a, 28b, 28c, 28d, 28e, 28f) aufweist, und mit jedem der Teilstränge (28a, 28b, 28c, 28d, 28e, 28f) jeweils mehrere, insbesondere in Reihe geschaltete, Spulen im Generator (12) gebildet sind.

11. Windenergieanlagengeneratorsystem (10) nach einem der Ansprüche 8 bis 10, wobei der Stator (14) mehrere Nuten (40) aufweist und jeder oder zumindest in der Mehrheit der Nuten (40) ein Strang (36a, 36b, 36c, 36d, 36e, 36f) oder Teilstrang eines Dreiphasensystems (32a, 32b) eingebracht ist, der einem anderen Dreiphasensystem (32a, 32b) zugeordnet ist als die Stränge (36a, 36b, 36c, 36d, 36e, 36f) oder Teilstränge, die in den benachbarten Nuten (40) angeordnet sind.

12. Windenergieanlagengeneratorsystem (10) nach einem der Ansprüche 8 bis 11, wobei mindestens ein erster Gleichrichter (34a) bereitgestellt ist, mit dem die Stränge (36a, 36b, 36c, 36d, 36e, 36f) des ersten Dreiphasensystems (32a) eingangsseitig verbunden sind und der eine eingangsseitige Spannung in eine Gleichspannung wandelt und die Gleichspannung ausgangsseitig an zwei Ausgangspotentialen ausgibt, wobei der erste Schalter (54a, 54b, 54c, 54d, 54e, 54f, 64) im ersten Gleichrichter (34a) bereitgestellt ist und
mindestens ein zweiter Gleichrichter (34b) bereitgestellt ist, mit dem die Stränge (36a, 36b, 36c, 36d, 36e, 36f) des zweiten Dreiphasensystems (32b) eingangsseitig verbunden sind und der eine eingangsseitige Spannung in eine Gleichspannung wandelt und die Gleichspannung ausgangsseitig an zwei Ausgangspotentialen ausgibt, wobei der zweite Schalter (54a, 54b, 54c, 54d, 54e, 54f, 64) im zweiten Gleichrichter (34b) bereitgestellt ist.

13. Windenergieanlagengeneratorsystem (10) nach Anspruch 12, wobei der erste Gleichrichter (34a) und der zweite Gleichrichter (34b) jeweils aktive Gleichrichter (50) sind und jeweils sechs erste bzw. sechs zweite Schalter (54a, 54b, 54c, 54d, 54e, 54f, 64) umfassen, wobei die dem jeweiligen Gleichrichter (34a, 34b) jeweils zugeordneten Stränge (36a, 36b, 36c, 36d, 36e, 36f) jeweils mit jedem der zwei Ausgangspotentiale, die den Ausgang bilden, über einen der ersten Schalter (54a, 54b, 54c, 54d, 54e, 54f, 64) im ersten Gleichrichter (34a) bzw. einen der zweiten Schalter (54a, 54b, 54c, 54d, 54e, 54f, 64) im zweiten Gleichrichter (34b) verbunden sind.

14. Windenergieanlagengeneratorsystem (10) nach Anspruch 12, wobei der erste Gleichrichter (34a) und der zweite Gleichrichter (34b) jeweils passive Gleichrichter (62) sind und ein erster Schalter (54a, 54b, 54c, 54d, 54e, 54f, 64) im ersten Gleichrichter (34a) zwischen die Ausgangspotentiale geschaltet ist, um die Ausgangspotentiale im geschlossenen Zustand kurzzuschließen und im geöffneten Zustand unverbunden zu lassen, und der zweite Schalter (54a, 54b, 54c, 54d, 54e, 54f, 64) im zweiten Gleichrichter (34b) zwischen die Ausgangspotentiale geschaltet ist, um die Ausgangspotentiale im geschlossenen Zustand kurzzuschließen und im geöffneten Zustand unverbunden zu lassen.

15. Windenergieanlage (100), wobei die Windenergieanlage (100) eingerichtet ist, das Verfahren nach einem der Ansprüche 1 bis 7 auszuführen und/oder ein Windenergieanlagengeneratorsystem (10) nach einem der Ansprüche 8 bis 14 aufweist.
